# EUROPEAN PATENT APPLICATION

(11) **EP 4 678 712 A1**
(43) Date of publication of application: **14.01.2026**
(21) Application number: 24770382.0
(22) Date of filing: 16.02.2024
(51) Int. Cl.: C09K 3/00, C08L 33/04, C08L 61/28, C08L 83/04, C09D 133/00, C09D 183/04, C09D 201/02

(54) **LIGHT-RELEASE ADDITIVE FOR RELEASE SHEET, RESIN COMPOSITION FOR RELEASE SHEET, AND RELEASE SHEET**

(30) Priority: 10.03.2023 JP 2023037117
(71) Applicant: SHIN-ETSU CHEMICAL CO., LTD., Tokyo 1000005 (JP)
(72) Inventor: ONOZAWA Hayato, Annaka-shi, Gunma 379-0224 (JP)
(74) Representative: Ter Meer Steinmeister & Partner
(86) International application number: PCT/JP2024/005535
(87) International publication number: WO 2024/190267

(57) **Abstract**

Provided is a light-release additive for a release sheet, which contains an organopolysiloxane represented by formula (1). 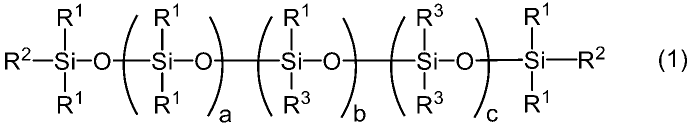 (In the formula, R¹ moieties each independently denote an unsubstituted or substituted alkyl group having 1-3 carbon atoms, R² moieties each independently denote a monovalent organic group which has 1-10 carbon atoms, has a hydroxyl group, an amino group or a carboxyl group, and may include a heteroatom, and R³ moieties each independently denote an unsubstituted or substituted monovalent hydrocarbon group having 4-20 carbon atoms. a, b and c are numbers that satisfy the relationships 2 ≤ a ≤ 150, 0 ≤ 9b+19c ≤ a, and 2 ≤ a+b+c ≤ 166)

## Description

### TECHNICAL FIELD

This invention relates to an easy-release additive for release sheet which is a material for adjusting the release properties of release sheets and gives a release coating having satisfactory release properties and a high subsequent adhesion that a pressure-sensitive adhesive tape as released therefrom exhibits. It also relates to a release sheet-forming resin composition comprising the additive, and a release sheet using the resin composition.

### BACKGROUND ART

In the prior art, a release agent is coated to the surface of a sheet-like substrate of paper, plastics or the like to form a release coating thereon for thereby providing the substrate with release properties relative to adhesive materials or pressure-sensitive adhesive materials.

The release sheet has a wide variety of applications. It is used in connection with pressure-sensitive adhesive materials as labels, stickers and pressure-sensitive adhesive tapes. It is also used in the step of shaping non-pressure-sensitive adhesive materials like ceramic green sheets and synthetic leather. Depending on a particular application, different properties are required.

One example for use in the step of shaping non-pressure-sensitive adhesive materials is casting paper for the manufacture of synthetic leather. The method for the manufacture of synthetic leather involves the steps of curing a release agent composition onto a substrate to form a casting paper, coating a urethane resin, vinyl chloride resin, polyamide resin, polyamic acid resin or the like to the casting paper, and drying. By forming an adhesive layer on the dry resin, mating a base fabric therewith, and peeling the resin from the casting paper, the synthetic leather is manufactured.

In the manufacture of synthetic leather, the casting paper is used plural times in order to increase productivity. It is then desired that the casting paper experiences a minimal change of peeling or release properties after repeated use. As the resin composition for imparting release properties to the surface of casting paper for synthetic leather, Patent Documents 1 and 2 disclose compositions comprising a hydroxy-containing acrylic resin or an amino resin and a silicone resin. The release coatings of these resin compositions are acknowledged to show good release properties and repetitive durability relative to non-pressure-sensitive adhesive materials such as urethane resins.

### PRIOR ART DOCUMENTS

### PATENT DOCUMENTS

Patent Document 1: JP 5282083
Patent Document 2: JP-A 2020-189945

### SUMMARY OF INVENTION

### TECHNICAL PROBLEM

Although the above-mentioned resin compositions show satisfactory release properties relative to non-pressure-sensitive adhesive materials, their release properties relative to pressure-sensitive adhesive materials are insufficient. It is a common practice that after peeled from the release coating, the pressure-sensitive adhesive material is attached to another adherend. It is then required that the pressure-sensitive adhesive material after peeling does not lose its adhesive or bonding force, that is, has a high subsequent adhesion (rate).

An object of the invention, which has been made under the above-mentioned circumstances, is to provide an easy-release additive for release sheet which when added to a release sheet-forming resin composition in a small amount, helps the resin composition exhibit satisfactory release properties relative to pressure-sensitive adhesive materials, and forms a release coating offering a high subsequent adhesion (rate); a release sheet-forming resin composition comprising the additive; and a release sheet using the resin composition.

### SOLUTION TO PROBLEM

Making extensive investigations to attain the above object, the inventor has found that the outstanding problem is solved by an easy-release additive for release sheet comprising an organopolysiloxane having the formula (1), and that a release sheet obtained by blending the easy-release additive in a release sheet-forming resin composition and forming a release coating of the composition on a substrate exhibits satisfactory release properties and offers a high subsequent adhesion (rate). The invention is predicated on this finding.

Accordingly, the invention is as defined below.
1. An easy-release additive for release sheet, comprising an organopolysiloxane having the formula (1): 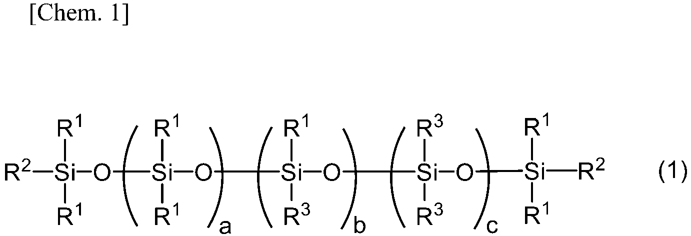 wherein R¹ is independently a C₁-C₃ unsubstituted or substituted alkyl group, R² is independently a C₁-C₁₀ monovalent organic group which contains hydroxy, amino or carboxy and may have an intervenient heteroatom, and R³ is independently a C₄-C₂₀ unsubstituted or substituted, monovalent hydrocarbon group, a, b and c are numbers satisfying 2 ≤ a ≤ 150, 0 ≤ 9b+19c ≤ a, and 2 ≤ a+b+c ≤ 166.
2. The easy-release additive of 1 wherein in formula (1), b and c are 0.
3. A release sheet-forming resin composition comprising
   (A) the easy-release additive of 1 or 2 in such an amount as to give 0.1 to 20 parts by mass of the organopolysiloxane having formula (1) per 100 parts by mass of components (B) and (C) combined,
   (B) 100 parts by mass of an acrylic resin, and
   (C) 10 to 120 parts by mass of a melamine compound.
4. The resin composition of 3 wherein in formula (1), b and c are 0.
5. The resin composition of 3 or 4 wherein component (C) is a complete alkyl type methylated melamine compound.
6. A release sheet comprising a substrate and a release coating formed thereon, which is a cured product of the resin composition of any one of 3 to 5.

### ADVANTAGEOUS EFFECTS OF INVENTION

When the easy-release additive for release sheet of the invention is blended in a release sheet-forming resin composition, a release coating exhibiting satisfactory release properties and offering a high subsequent adhesion (rate) can be formed therefrom.

### DESCRIPTION OF EMBODIMENTS

Now the invention is described in detail. It is noted that "release sheet-forming resin composition" is sometimes simply referred to as "resin composition."

### [Easy-release additive for release sheet]

The invention provides an easy-release additive for release sheet comprising an organopolysiloxane having the formula (1). The organopolysiloxane may be used alone or in admixture of two or more. The order of arrangement of siloxane units is not limited to the illustrated one (the same holds true, hereinafter). 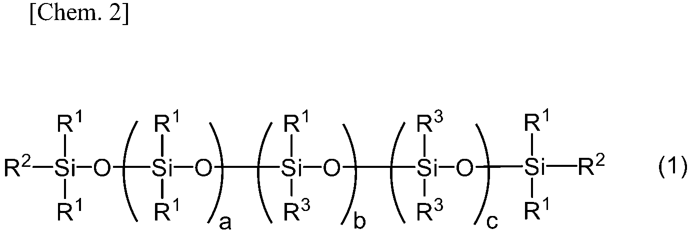 Herein R¹ is independently a C₁-C₃ unsubstituted or substituted alkyl group, R² is independently a C₁-C₁₀ monovalent organic group which contains hydroxy, amino or carboxy and may have an intervenient heteroatom, and R³ is independently a C₄-C₂₀ unsubstituted or substituted, monovalent hydrocarbon group, a, b and c are numbers satisfying 2 ≤ a ≤ 150, 0 ≤ 9b+19c ≤ a, and 2 ≤ a+b+c ≤ 166.

R¹ is independently a C₁-C₃ unsubstituted or substituted alkyl group such as methyl, ethyl and propyl. From the aspect of availability, methyl is preferred.

R² is independently a C₁-C₁₀ monovalent organic group which contains hydroxy, amino or carboxy and in which a heteroatom may intervene. It gives an organopolysiloxane having a functional group capable of chemically bonding with at least one compound selected from a resin and a crosslinker in the release sheet-forming resin composition. Suitable heteroatoms include oxygen, nitrogen and sulfur. Examples of the group R² include hydroxyalkyl groups such as 2-hydroxyethyl, 3-hydroxypropyl, 2,3-dihydroxypropyl, 2-hydroxypropyl, 4-hydroxbutyl, 2-hydroxybutyl, 2-(hydroxymethyl)propyl, 2-hydroxypentyl, 3-hydroxy-2,2-dimethylpropyl, 3-hydroxypentyl, 5-hydroxypentyl, 6-hydroxyhexyl, 2-hydroxyhexyl, 7-hydroxyheptyl, 8-hydroxyoctyl, 2-hydroxyethoxy, 3-[(2-hydroxyethyl)oxy]propyl and 3-[(3-hydroxypropyl)oxy]propyl; polyethylene glycol groups: -(CH₂)₃-(OCH₂CH₂)ₙ₁-OH wherein n1 is an integer of 1 to 3, polypropylene glycol groups: -(CH₂)₃-(OCH₂CH₂CH₂)ₙ₂-OH wherein n2 is an integer of 1 to 2, 3-aminopropyl, N-2-(aminoethyl)-3-aminopropyl, carboxyoctyl, 3-glycidoxypropyl, 2-(3,4-epoxycyclohexyl)ethyl, and 3-isocyanatopropyl. Inter alia, hydroxyalkyl, polyethylene glycol, and polypropylene glycol groups are preferred from the aspect of cure.

R³ is independently a C₄-C₂₀ unsubstituted or substituted, monovalent hydrocarbon group. Examples include alkyl groups such as butyl, pentyl, hexyl, heptyl, and octyl, cycloalkyl groups such as cyclohexyl, aryl groups such as phenyl and tolyl, and aralkyl groups such as benzyl. Inter alia, aryl and aralkyl groups are preferred, and phenyl and benzyl are more preferred. In formula (1), the proportion of R³ is preferably up to 5 mol% based on the total of R¹, R² and R³ and may even be 0 mol%.

In formula (1), a, b and c are numbers satisfying 2 ≤ a ≤ 150, 0 ≤ 9b+19c ≤ a, and 2 ≤ a+b+c ≤ 166. The subscript "a" is preferably 4 ≤ a ≤ 100, more preferably 5 ≤ a ≤ 60, even more preferably 6 ≤ a ≤ 40, most preferably 7 ≤ a ≤ 26. If "a" is less than the lower limit, release properties may be exacerbated. If "a" exceeds the upper limit, the subsequent adhesion (rate) may become low.

The subscripts b and c are numbers satisfying 0 ≤ 9b+19c ≤ a, preferably 0 ≤ 9b+19c ≤ 0.5a, more preferably 0 ≤ 9b+19c ≤ 0.25a. Most preferably b and c are 0. If 9b+19c is above the upper limit, release properties may be exacerbated.

The sum a+b+c is 2 ≤ a+b+c ≤ 166, preferably 4 ≤ a+b+c ≤ 111, more preferably 5 ≤ a+b+c ≤ 66, even more preferably 6 ≤ a+b+c ≤ 44, most preferably 7 ≤ a+b+c ≤ 28. If a+b+c is less than the lower limit, release properties may be exacerbated. If a+b+c exceeds the upper limit, the subsequent adhesion (rate) may become low.

Examples of the organopolysiloxane having formula (1) include those of the following formulae, but are not limited thereto. Herein Me stands for methyl, Ph stands for phenyl, and the parameters are selected so as to satisfy the definition of formula (1).

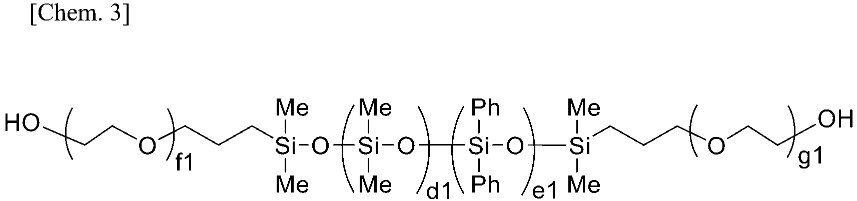

Herein 2 ≤ d1 ≤ 150, 0 ≤ e1 ≤ 7, 0 ≤ f1 ≤ 2, and 0 ≤ g1 ≤ 2.

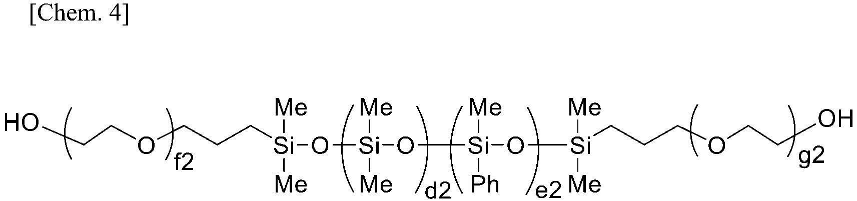

Herein 2 ≤ d2 ≤ 150, 0 ≤ e2 ≤ 16, 0 ≤ f2 ≤ 2, and 0 ≤ g2 ≤ 2.

The method for preparing the organopolysiloxane of the structure having formula (1) is not particularly limited. It may be prepared by any well-known method.

The amount of the organopolysiloxane of the structure having formula (1) in the release sheet-forming release additive is not particularly limited, and may be selected as appropriate. In the release sheet-forming release additive (A), a solvent may be blended as an optional component. When diluted with a solvent, the additive becomes more compatible with and more dispersive in the release sheet-forming resin composition.

The solvent may be any of compounds in which the organopolysiloxane of the structure having formula (1) is dissolvable. Examples include aromatic hydrocarbon compounds such as toluene and xylene; aliphatic hydrocarbon compounds such as hexane, heptane, and iso-paraffin; alcohol compounds such as methanol, ethanol and 1-butanol; ketone compounds such as acetone, methyl ethyl ketone, and methyl isobutyl ketone; ester compounds such as ethyl acetate and butyl acetate; and ether compounds such as diisopropyl ether and 1,4-dioxane. In the practice of the invention, the solvent is preferably selected from aromatic hydrocarbon compounds such as toluene and xylene; aliphatic hydrocarbon compounds such as hexane, heptane, and iso-paraffin; ketone compounds such as acetone, methyl ethyl ketone, and methyl isobutyl ketone; ester compounds such as ethyl acetate and butyl acetate; and ether compounds such as diisopropyl ether and 1,4-dioxane. The solvent may be blended alone or in admixture.

When used, the amount of the solvent blended is preferably 10 to 500 parts by mass, more preferably 20 to 300 parts by mass per 100 parts by mass of the organopolysiloxane (A) of the structure having formula (1).

The "easy release" effect (or light release effect) is exerted when the release force is preferably up to 30 gf/25 mm, more preferably up to 20 gf/25 mm as measured by the method of Examples (e.g., Example 1) described below.

### [Release sheet-forming resin composition]

The easy-release additive for release sheet of the invention is suited for use in release sheet-forming resin compositions. The easy-release additive is preferably blended in such an amount as to give 0.1 to 20 parts by mass, more preferably 0.2 to 15.0 parts by mass, even more preferably 0.3 to 13.0 parts by mass of the organopolysiloxane having formula (1) per 100 parts by mass of the total of a resin and a crosslinker in the release sheet-forming resin composition. Within the range, satisfactory release properties and a high subsequent adhesion (rate) are obtained.

The resin is selected from the group consisting of acrylic resins, polyester resins, urethane resins, and epoxy resins. These resins may be used alone or in admixture. Inter alia, acrylic resins and polyester resins are preferred. The crosslinker is selected from the group consisting of oxazoline compounds, carbodiimide compounds, isocyanate compounds, melamine compounds, and amine compounds. These compounds may be used alone or in admixture. Inter alia, isocyanate compounds and melamine compounds are preferred. In the release sheet-forming resin composition, any well-known components may be blended alone or in admixture in a suitable amount as long as the benefits of the invention are not impaired.

The release sheet-forming resin composition is a composition comprising the easy-release additive for release sheet, preferably a composition comprising components (A) to (C):
(A) the easy-release additive for release sheet,
(B) an acrylic resin, and
(C) a melamine compound.

### [Component (A)]

The amount of (A) the easy-release additive for release sheet in the release sheet-forming resin composition is such as to give 0.1 to 20 parts by mass, more preferably 0.2 to 15.0 parts by mass of the organopolysiloxane having formula (1) per 100 parts by mass of components (B) and (C) combined.

### [Component (B)]

The acrylic resin (B) used herein is a copolymer of a radical polymerizable monomer having one radical polymerizable group per molecule and contains at least one selected from acrylic acid, methacrylic acid and derivatives thereof as an essential component. Component (B) may be used alone or in admixture.

Component (B) preferably has a hydroxy group for crosslinking with component (C). Component (B) preferably has a hydroxy number of 80 to 200 mg KOH/g, more preferably 90 to 190 mg KOH/g, even more preferably 100 to 180 mg KOH/g. With the hydroxy number falling in the range, satisfactory release properties are obtained. It is noted that the hydroxy number of a hydroxy-containing acrylic resin is measured according to the neutralization titration method of JIS K 0070.

As component (B), use is preferably made of a copolymer of a radical polymerizable monomer (B-a) having at least one hydroxy group per molecule and having at least one radical polymerizable group per molecule with a radical polymerizable monomer (B-b) having at least one radical polymerizable group per molecule, but not a hydroxy group per molecule. The polymerization ratio of component (B-a) to component (B-b) is adjusted in accordance with the hydroxy number of component (B).

Component (B-a) is not particularly limited as long as it is a radical polymerizable monomer having at least one hydroxy group per molecule and having at least one radical polymerizable group per molecule. It may be used alone or in admixture of two or more. Exemplary of the radical polymerizable group are acryloyl, methacryloyl, styryl, cinnamate, vinyl and allyl groups.

Examples of component (B-a) include 2-hydroxyethyl (meth)acrylate, 2-hydroxypropyl (meth)acrylate, 2-hydroxybutyl (meth)acrylate, 2-hydroxy-3-phenoxypropyl (meth)acrylate, 1,4-cyclohexanedimethanol (meth)acrylate, 2-hydroxyethyl (meth)acrylate, and the foregoing compounds modified with caprolactone, available as Placcel^{®} series F from Daicel Corp.

Component (B-b) is not particularly limited as long as it is a radical polymerizable monomer having at least one radical polymerizable group per molecule, but not a hydroxy group per molecule. It may be used alone or in admixture of two or more. Exemplary of the radical polymerizable group are acryloyl, methacryloyl, styryl, cinnamate, vinyl and allyl groups.

Examples of component (B-b) include styrene compounds such as styrene, o-methylstyrene, p-methylstyrene, and α-methylstyrene; esters of (meth)acrylic acid such as methyl (meth)acrylate, ethyl (meth)acrylate, n-butyl (meth)acrylate, 2-ethylhexyl (meth)acrylate, lauryl (meth)acrylate, stearyl (meth)acrylate, cyclohexyl (meth)acrylate, benzyl (meth)acrylate, isobornyl (meth)acrylate, trifluoropropyl (meth)acrylate, perfluorobutylethyl (meth)acrylate, and perfluorooctylethyl (meth)acrylate; epoxy-containing radical polymerizable monomers such as glycidyl (meth)acrylate, β-methylglycidyl (meth)acrylate, and 3,4-epoxycyclohexylmethyl (meth)acrylate; radical polymerizable silane compounds such as γ-methacryloxypropyltrimethoxysilane, γ-methacryloxypropylmethyldimethoxysilane, γ-methacryloxypropyldimethylmethoxysilane, γ-methacryloxypropyltriethoxysilane, γ-methacryloxypropylmethyldiethoxysilane, γ-methacryloxypropyltributoxysilane, γ-methacryloxypropyltriisopropenoxysilane, γ-acryloxypropyltrimethoxysilane, γ-acryloxymethyltrimethoxysilane, γ-acryloxypropyltriethoxysilane, γ-acryloxypropylmethyldiethoxysilane, styryltrimethoxysilane, styryltriethoxysilane, and α-methylstyryltrimethoxysilane; polyoxyalkylene-containing radical polymerizable monomers; and glycerol (meth)acrylate.

The copolymerization of component (B-a) with component (B-b) is carried out in the presence of a conventional radical polymerization initiator. Suitable initiators include peroxides such as benzoyl peroxide, dicumyl peroxide, lauroyl peroxide, and tert-butyl 2-ethylperoxyhexanoate; and azo compounds such as 2,2'-azobis(2-methylbutyronitrile). Any of solution polymerization, emulsion polymerization, suspension polymerization, and bulk polymerization methods is applicable. The amount of the polymerization initiator used is preferably 0.01 to 10 parts by mass, more preferably 0.02 to 5 parts by mass per 100 parts by mass of components (B-a) and (B-b) combined.

In the practice of the invention, the solution polymerization method is preferred among the foregoing polymerization methods because it is easy to adjust the weight average molecular weight of component (B) to an optimum range. Examples of the solvent used herein include aromatic hydrocarbon compounds such as benzene, toluene and xylene; ketone compounds such as acetone, methyl ethyl ketone, and methyl isobutyl ketone; ester compounds such as ethyl acetate, n-butyl acetate and isobutyl acetate; and monohydric alcohol compounds such as ethanol, isopropanol, n-butano1 and isobutano1. The solvent may be used alone or in admixture. The amount of the solvent used is preferably 10 to 900 parts by mass, more preferably 20 to 800 parts by mass per 100 parts by mass of components (B-a) and (B-b) combined.

When components (B-a) and (B-b) are copolymerized by the solution polymerization method, the polymerization conditions are preferably set at 50 to 180°C, especially 60 to 120°C and 1 to 15 hours, especially 2 to 10 hours.

Component (B) has a weight average molecular weight (Mw) of preferably 5,000 to 400,000, more preferably 10,000 to 300,000, even more preferably 15,000 to 250,000, most preferably 20,000 to 200,000. A Mw in the range ensures satisfactory coating and handling. It is noted that Mw is measured by gel permeation chromatography (abbreviated as GPC, hereinafter) versus polystyrene standards using tetrahydrofuran as developing solvent.

### [Component (C)]

The melamine compound (C) used herein is a compound obtained from condensation reaction of melamine with formaldehyde. It is used as a single compound or a mixture of two or more compounds. Component (C) plays the role of a crosslinker for reaction with components (A) and/or (B). It may be used alone or in admixture. Component (C) can be synthesized by any well-known methods as described in Japan Pat. Appln. S51-137629, for example. A commercially available one may also be used.

Component (C) can be generally divided into complete alkyl, methylol, imino, and methylol/imino types in terms of the functional group on the compound serving as the main component. It can be further divided in terms of the type of alkoxymethyl group, into methylated melamine compounds in which all alkoxymethyl groups are methoxymethyl, n-butylated melamine compounds in which all alkoxymethyl groups are n-butoxymethyl, and methylated/n-butylated melamine compounds in which alkoxymethyl groups are methoxymethyl and n-butoxymethyl groups in admixture.

From the aspect of releasability, component (C) is preferably selected from complete alkyl type methylated melamine compounds, complete alkyl type methylated/n-butylated melamine compounds, methylol type methylated melamine compounds, and methylol type methylated/n-butylated melamine compounds, more preferably complete alkyl type methylated melamine compounds and methylol type methylated melamine compounds, most preferably complete alkyl type methylated melamine compounds.

Commercially available examples of component (C) include Cymel 300, Cymel 301 and Cymel 303LF (from Allnex Japan Co., Ltd., complete alkyl type methylated melamine compounds), Cymel 370N (from Allnex Japan Co., Ltd., methylol type methylated melamine compound), Cymel 325 and Cymel 327 (from Allnex Japan Co., Ltd., imino type methylated melamine compounds), Cymel 232 and Cymel 235 (from Allnex Japan Co., Ltd., complete alkyl type methylated/n-butylated melamine compounds), and Cymel 251 (from Allnex Japan Co., Ltd., methylol type methylated/n-butylated melamine compound).

The amount of component (C) blended is preferably 10 to 120 parts by mass, more preferably 20 to 100 parts by mass, even more preferably 30 to 80 parts by mass, most preferably 40 to 60 parts by mass per 100 parts by mass of component (B). As long as the amount of component (C) is in the range, better release properties and a higher subsequent adhesion (rate) are available.

### [Component (D)]

In the release sheet-forming resin composition, an acidic catalyst (D) may be used for promoting the crosslinking reaction of components (A), (B) and (C). Examples of component (D) include inorganic acids such as hydrochloric acid, sulfuric acid, phosphoric acid and boric acid, and organic acids, e.g., carboxylic acids such as acetic acid, monochloroacetic acid, dichloroacetic acid, and butyric acid, and organosulfonic acids such as benzenesulfonic acid, p-toluenesulfonic acid, xylenesulfonic acid, p-phenolsulfonic acid, methanesulfonic acid, and ethanesulfonic acid. The acidic catalyst may be used alone or in admixture.

When used, the amount of component (D) blended may be a catalytic amount capable of promoting reaction, preferably 0.1 to 20 parts by mass, more preferably 1 to 10 parts by mass per 100 parts by mass of components (A) to (C) combined. An amount in the range leads to better release properties and a higher subsequent adhesion (rate).

### [Component (E)]

In the release sheet-forming resin composition, a solvent (E) may be blended. By diluting with component (E), there are obtained advantages on practical use, for example, improvements in coating operation, the thickness and surface finish of a coating film, and the state of a coating film.

Component (E) may be any compound as long as the composition is dissolvable therein. Examples include aromatic hydrocarbon compounds such as toluene and xylene; aliphatic hydrocarbon compounds such as hexane, heptane, and iso-paraffin; alcohol compounds such as methanol, ethanol and 1-butanol; ketone compounds such as acetone, methyl ethyl ketone, and methyl isobutyl ketone; ester compounds such as ethyl acetate and butyl acetate; and ether compounds such as diisopropyl ether and 1,4-dioxane. In the practice of the invention, the solvent is preferably selected from aromatic hydrocarbon compounds such as toluene and xylene; aliphatic hydrocarbon compounds such as hexane, heptane, and iso-paraffin; ketone compounds such as acetone, methyl ethyl ketone, and methyl isobutyl ketone; ester compounds such as ethyl acetate and butyl acetate; and ether compounds such as diisopropyl ether and 1,4-dioxane. The solvent may be blended alone or in admixture.

When used, the amount of component (E) blended is preferably 20 to 20,000 parts by mass, more preferably 50 to 10,000 parts by mass per 100 parts by mass of components (A) to (C) combined. An amount in the range leads to more efficient coating operation and better surface state of a coating.

### [Component (F)]

In the release sheet-forming resin composition, an organopolysiloxane having the general formula (2) may be blended as a component for imparting parting properties. It may be used alone or in admixture.

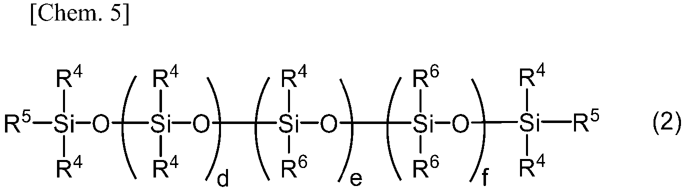

Herein, R⁴ is independently a C₁-C₃ substituted or unsubstituted alkyl group, R⁵ is independently a C₁-C₁₀ monovalent organic group which contains a hydroxy, amino or carboxy moiety and in which a heteroatom may intervene, R⁶ is independently a C₄-C₂₀ substituted or unsubstituted hydrocarbon group, d, e and f are numbers satisfying 2 ≤ d ≤ 400, d ≤ 4e+9f, 4f-e ≤ 6d, and 2 ≤ d+e+f ≤ 500. In formula (2), the proportion of R⁵ is preferably 10 to 60 mol% based on the total of R⁴, R⁵, and R⁶.

R⁴ is independently a C₁-C₃ unsubstituted or substituted alkyl group such as methyl, ethyl and propyl. From the aspect of availability, methyl is preferred.

R⁵ is independently a C₁-C₁₀ monovalent organic group having hydroxy, amino or carboxy, in which a heteroatom may intervene. Examples of the group R⁵ include hydroxyalkyl groups such as 2-hydroxyethyl, 3-hydroxypropyl, 2,3-dihydroxypropyl, 2-hydroxypropyl, 4-hydroxbutyl, 2-hydroxybutyl, 2-(hydroxymethyl)propyl, 2-hydroxypentyl, 3-hydroxy-2,2-dimethylpropyl, 3-hydroxypentyl, 5-hydroxypentyl, 6-hydroxyhexyl, 2-hydroxyhexyl, 7-hydroxyheptyl, 8-hydroxyoctyl, 2-hydroxyethoxy, 3-[(2-hydroxyethyl)oxy]propyl and 3-[(3-hydroxypropyl)oxy]propyl; polyethylene glycol groups: -(CH₂)₃-(OCH₂CH₂)ₙ₁-OH wherein n1 is an integer of 1 to 3, polypropylene glycol groups: -(CH₂)₃-(OCH₂CH₂CH₂)ₙ₂-OH wherein n2 is an integer of 1 to 2, 3-aminopropyl, N-2-(aminoethyl)-3-aminopropyl, carboxyoctyl, 3-glycidoxypropyl, 2-(3,4-epoxycyclohexyl)ethyl, and 3-isocyanatopropyl. Inter alia, hydroxyalkyl, polyethylene glycol, and polypropylene glycol groups are preferred from the aspect of cure.

R⁶ is independently a C₄-C₂₀ unsubstituted or substituted, monovalent hydrocarbon group. Examples include alkyl groups such as butyl, pentyl, hexyl, heptyl, and octyl, cycloalkyl groups such as cyclohexyl, aryl groups such as phenyl and tolyl, and aralkyl groups such as benzyl. Inter alia, aryl and aralkyl groups are preferred, and phenyl and benzyl are more preferred.

In formula (2), d, e and f are numbers satisfying 2 ≤ d ≤ 400, d ≤ 4e+9f, 4f-e ≤ 6d, and 2 ≤ d+e+f ≤ 500. Preferably, d is 4 ≤ d ≤ 300, more preferably 5 ≤ d ≤ 200, even more preferably 6 ≤ d ≤ 150, most preferably 7 ≤ d ≤ 100.

The subscripts e and f are numbers satisfying d ≤ 4e+9f and 4f-e ≤ 6d, preferably 3d ≤ 7e+17f and f ≤ d.

The sum d+e+f is preferably 4 ≤ d+e+f ≤ 400, more preferably 5 ≤ d+e+f ≤ 300, even more preferably 6 ≤ d+e+f ≤ 200, most preferably 7 ≤ d+e+f ≤ 100.

Examples of component (F) are shown below, but not limited thereto. Herein Me stands for methyl, Ph stands for phenyl, and the parameters are selected so as to satisfy the definition of formula (2).

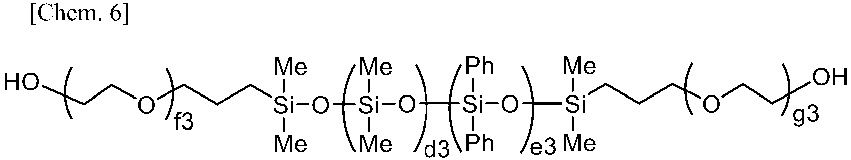

Herein 2 ≤ d3 ≤ 450, 1 ≤ e3 ≤ 300, 0 ≤ f3 ≤ 2, and 0 ≤ g3 ≤ 2.

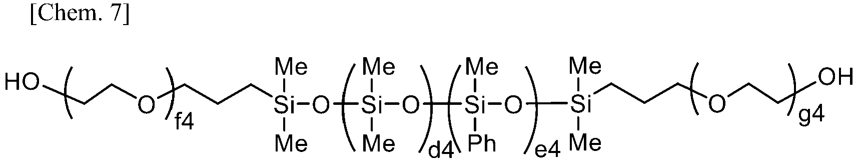

Herein 2 ≤ d4 ≤ 400, 1 ≤ e4 ≤ 498, 0 ≤ f4 ≤ 2, and 0 ≤ g4 ≤ 2.

When used, the amount of component (F) blended is preferably 0.1 to 10 parts by mass, more preferably 1 to 8 parts by mass, even more preferably 3 to 7 parts by mass per 100 parts by mass of component (B), from the aspect of imparting parting properties.

### [Other components]

To the release sheet-forming resin composition, optional components other than the foregoing may be added as long as the benefits of the invention are not lost. Suitable optional components include antioxidants such as phenol, quinone, amine, phosphorus, phosphite, sulfur, and thioether-based compounds, photostabilizers such as triazole and benzophenone-based compounds, flame retardants such as phosphate, halide, phosphorus and antimony-based compounds, dyes, pigments, defoamers, fillers, leveling agents, thickeners, and surfactants. They may be used alone or in admixture.

### [Method for preparing release sheet-forming resin composition]

The resin composition may be prepared by mixing components (A) to (C) and if necessary, components (D), (E), (F) and other components. When component (D) is blended, the method involving previously mixing components (A) to (C) and if necessary, components (E), (F) and other components until uniform and thereafter, adding component (D) immediately before use is recommended in view of shelf stability. The mixing technique is not particularly limited and any well-known techniques may be used.

### [Release sheet (coated article)]

A further embodiment of the invention is a release sheet comprising a substrate and a release coating formed on the surface thereof, the release coating being a cured product of the resin composition defined herein. The release sheet can be prepared by coating the composition onto a substrate and heating to form a release coating.

Specifically, the composition is applied directly or after diluted with the aforementioned solvent to the aforementioned range, on one surface or both surfaces of a substrate such as paper or film using a suitable coater such as a comma coater, lip coater, roll coater, die coater, knife coater, blade coater, rod coater, kiss coater, gravure coater, or wire bar coater, or by a coating technique such as screen coating, dip coating or casting, to a coating weight of 0.01 to 100 g/m². The coating is then heated at 50 to 200°C for 1 to 120 seconds to form a release coating on the substrate.

The coating weight is preferably 0.01 to 100 g/m², more preferably 0.03 to 20 g/m². The temperature of the drying step is preferably 50 to 200°C, more preferably 70 to 180°C. The time of the drying step is preferably 1 to 120 seconds, more preferably 5 to 90 seconds. When the release coating is formed on both surfaces of the substrate, preferably the step of forming a release coating is carried out on each surface of the substrate.

Examples of the sheet-like substrate include coated papers such as polyethylene-laminated paper, glassine paper, woodfree paper, kraft paper, clay-coated paper, and mirror coated paper, synthetic papers such as YUPO^{®}, polyethylene films, polypropylene films such as CPP and OPP, polyester films such as polyethylene terephthalate films, polyamide films, polyimide films, polylactic acid films, polyphenol films, and polycarbonate films. The substrate whose surface has been subjected to corona treatment, etching treatment or plasma treatment for increasing the adhesion between the substrate and the release coating may also be used.

### EXAMPLES

Synthesis Examples, Examples and Comparative Examples are given below for illustrating the invention although the invention is not limited thereto.

In the formula representing an organopolysiloxane, the order of arrangement of siloxane units is not limited to the illustrated one.

Mw is measured by gel permeation chromatography (GPC) versus polystyrene standards using tetrahydrofuran as developing solvent.

### <Starting materials>

### Component (A): organopolysiloxane having formula (1)

(A1) organopolysiloxane having the general formula (3) 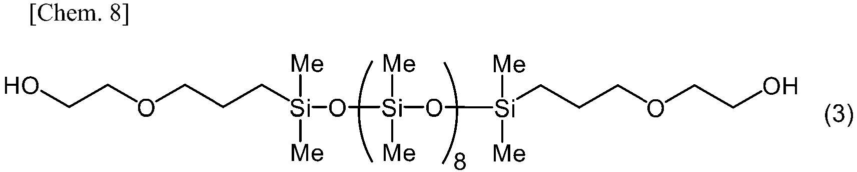 Herein Me stands for methyl.
(A2) organopolysiloxane having the general formula (4) 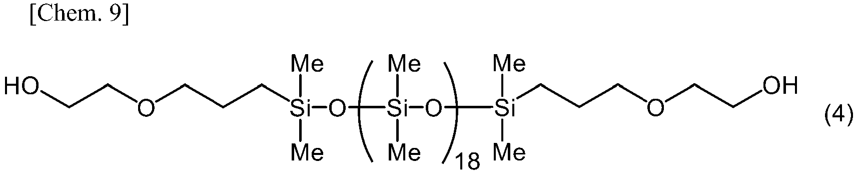 Herein Me stands for methyl.
(A3) organopolysiloxane having the general formula (5) 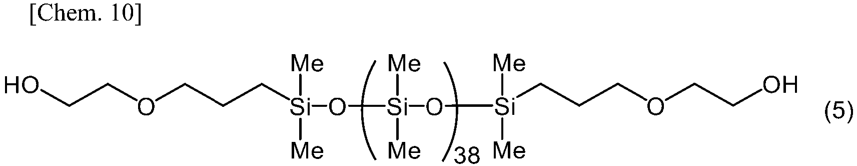 Herein Me stands for methyl.
(A4) organopolysiloxane having the general formula (6) 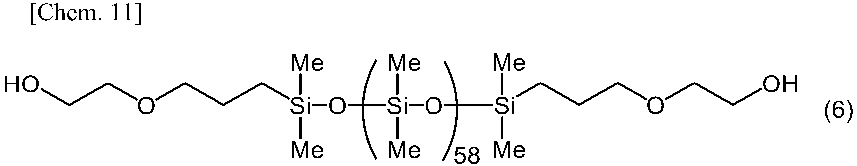 Herein Me stands for methyl.
(A5) organopolysiloxane having the general formula (7)

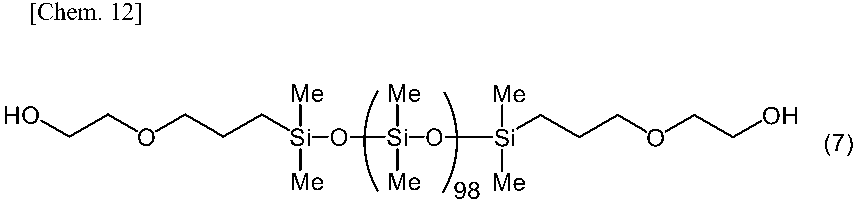

Herein Me stands for methyl.

### Component (B)

(B1)
50 mass% butyl acetate solution of hydroxy-containing acrylic resin obtained in Synthesis Example 1 below

### [Synthesis Example 1]

A glass reactor equipped with a stirrer, thermometer, reflux condenser, and dropping funnel was charged with 46.1 parts by mass of butyl acetate and heated at 90-100°C. In a nitrogen stream, a mixture of 26.0 parts by mass (0.20 mol) of 2-hydroxyethyl methacrylate, 14.0 parts by mass (0.14 mol) of methyl methacrylate, 29.2 parts by mass (0.28 mol) of styrene, 1.1 parts by mass (0.005 mol) of tert-butyl 2-ethylperoxyhexanoate, and 23.1 parts by mass of butyl acetate was added dropwise over 4 hours. After polymerization at 90-100°C for 2 hours, 0.2 part by mass (0.001 mol) of tert-butyl 2-ethylperoxyhexanoate was added. Polymerization was continued for 2 hours, obtaining a 50 mass% butyl acetate solution of hydroxy-containing acrylic resin. The hydroxy-containing acrylic resin had a hydroxy number of 161 mg KOH/g and a Mw of 36,000 as measured by GPC versus polystyrene standards.

(B2)
50 mass% butyl acetate solution of hydroxy-containing acrylic resin obtained in Synthesis Example 2 below

### [Synthesis Example 2]

A glass reactor equipped with a stirrer, thermometer, reflux condenser, and dropping funnel was charged with 39.6 parts by mass of butyl acetate and heated at 90-100°C. In a nitrogen stream, a mixture of 16.9 parts by mass (0.13 mol) of 2-hydroxyethyl methacrylate, 8.0 parts by mass (0.08 mol) of methyl methacrylate, 33.9 parts by mass (0.10 mol) of stearyl methacrylate, 1.1 parts by mass (0.005 mol) of tert-butyl 2-ethylperoxyhexanoate, and 19.8 parts by mass of butyl acetate was added dropwise over 4 hours. After polymerization at 90-100°C for 2 hours, 0.2 part by mass (0.001 mol) of tert-butyl 2-ethylperoxyhexanoate was added. Polymerization was continued for 2 hours, obtaining a 50 mass% butyl acetate solution of hydroxy-containing acrylic resin. The hydroxy-containing acrylic resin had a hydroxy number of 112 mg KOH/g and a Mw of 40,000 as measured by GPC versus polystyrene standards.

Component (C)
   (C1)
   Cymel 303LF (Allnex Japan Co., Ltd., complete alkyl type methylated melamine compound)
Component (D)
   p-toluenesulfonic acid
Component (E)
   toluene/methyl ethyl ketone (mass ratio 1:1)

### Component (F)

(F1)
organopolysiloxane having the general formula (8) below. The order of arrangement of siloxane units is not limited to the illustrated one.

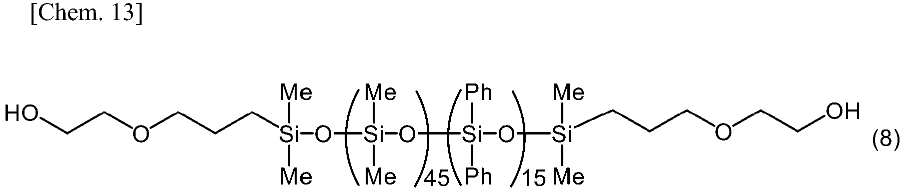

Herein Me stands for methyl and Ph for phenyl.

### [Examples 1 to 9 and Comparative Examples 1 and 2]

A coating composition was prepared by using the aforementioned components (A) to (F) as the starting materials and performing the following steps.

Components (A), (B), (C) and (F) were admitted into a flask in accordance with the blending ratio shown in Tables 1 and 2. Component (E) was blended in such an amount as to give a solid content of 5 mass% of components (A) to (C), followed by uniform mixing. To the solution, component (D) was added in such an amount as to provide 3% by mass of component (D) per 100 parts by mass of components (A) to (C) combined. By stirring and mixing, a release sheet-forming resin composition was obtained. Using the composition, a release sheet or film was prepared by the procedure described below. Since component (B) contains butyl acetate solvent, the amount shown in Tables is the net amount with the solvent being excluded.

### [Preparation of release film]

The composition was coated onto a PET film of 38 µm thick by a bar coater and heated in a hot air dryer at 120°C for 60 seconds to form a release layer. The coating mass was 0.3 g/m² as solids.

### [Release force]

A pressure-sensitive adhesive tape of 25 mm wide (No. 31B tape, tradename by Nitto Denko Co., Ltd.) was attached to the surface of the release layer and treated in a dryer at 25°C under a load of 70 g/cm² for 20 hours. Thereafter, the force (gf/25 mm) required for peeling the tape was measured on a tensile tester (model AGS-50G by Shimadzu Corp.) by pulling back the No. 31B tape at an angle of 180° and a peeling speed of 0.3 m/min. The numerical value is reported as release force and evaluated according to the following criterion.
○: release force is 20 gf/25 mm or less
△: 20 gf/25 mm < release force ≤ 30 gf/25 mm
×: release force is more than 30 gf/25 mm

### [Subsequent adhesion (rate)]

A pressure-sensitive adhesive tape of 25 mm wide (No. 31B tape, tradename by Nitto Denko Co., Ltd.) was attached to the surface of the release layer and treated in a dryer at 25°C under a load of 70 g/cm² for 20 hours. Thereafter, the adhesive tape was peeled from the release layer and attached to a stainless steel plate. Release force X was measured by peeling the adhesive tape from the stainless steel plate on a tensile tester (model AGS-50G by Shimadzu Corp.).

A pressure-sensitive adhesive tape which had not been attached to the release layer was attached to a stainless steel plate. Release force Y was measured by peeling the adhesive tape from the stainless steel plate on the tensile tester.

A subsequent adhesion (rate) was computed according to the formula: [(release force X)/(release force Y)] × 100% and evaluated according to the following criterion.
○: subsequent adhesion (rate) is more than 95%
△: 85% <subsequent adhesion (rate) ≤ 95%
×: subsequent adhesion (rate) is 85% or less

The results are shown in Tables 1 and 2. In Tables 1 and 2, the amount of component (B) blended is the net amount, and the amount of component (D) is not described.

**[Table 1]**

| | Example 1 | Example 2 | Example 3 | Example 4 | Example 5 |
|---|---|---|---|---|---|
| A-1 | 5 | | | | |
| A-2 | | 5 | | | |
| A-3 | | | 5 | | |
| A-4 | | | | 5 | |
| A-5 | | | | | 5 |
| B-1 | 100 | | 100 | 100 | 100 |
| B-2 | | 100 | | | |
| C-1 | 40 | 40 | 60 | 80 | 100 |
| pbw of (A)/100 pbw of (B)+(C) | 3.6 | 3.6 | 3.1 | 2.8 | 2.5 |
| Release force gf | 17 | 13 | 9 | 8 | 8 |
| Evaluation | ○ | ○ | ○ | ○ | ○ |
| Subsequent adhesion (rate) % | 99 | 98 | 88 | 89 | 88 |
| Evaluation | ○ | ○ | △ | △ | △ |

**[Table 2]**

| | Example 6 | Example 7 | Example 8 | Example 9 | Comp. Ex. 1 | Comp. Ex. 2 |
|---|---|---|---|---|---|---|
| A-2 | 0.5 | 2 | 10 | 5 | | |
| F-1 | | | | 5 | | 5 |
| B-1 | 100 | 100 | 100 | 100 | 100 | 100 |
| C-1 | 40 | 40 | 40 | 40 | 40 | 40 |
| pbw of (A)/100 pbw of (B)+(C) | 0.4 | 1.4 | 7.1 | 3.6 | 0.0 | 0.0 |
| Release force gf | 18 | 13 | 12 | 13 | 180 | 33 |
| Evaluation | ○ | ○ | ○ | ○ | × | × |
| Subsequent adhesion (rate) % | 98 | 99 | 96 | 98 | 88 | 98 |
| Evaluation | ○ | ○ | ○ | ○ | △ | ○ |

## Claims

1. An easy-release additive for release sheet, comprising an organopolysiloxane having the formula (1): 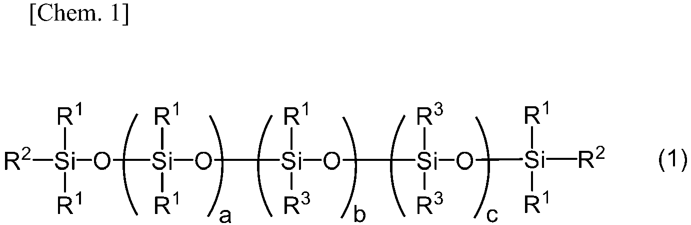 wherein R¹ is independently a C₁-C₃ unsubstituted or substituted alkyl group, R² is independently a C₁-C₁₀ monovalent organic group which contains hydroxy, amino or carboxy and may have an intervenient heteroatom, and R³ is independently a C₄-C₂₀ unsubstituted or substituted, monovalent hydrocarbon group, a, b and c are numbers satisfying 2 ≤ a ≤ 150, 0 ≤ 9b+19c ≤ a, and 2 ≤ a+b+c ≤ 166.

2. The easy-release additive of claim 1 wherein in formula (1), b and c are 0.

3. A release sheet-forming resin composition comprising
(A) the easy-release additive of claim 1 in such an amount as to give 0.1 to 20 parts by mass of the organopolysiloxane having formula (1) per 100 parts by mass of components (B) and (C) combined,
(B) 100 parts by mass of an acrylic resin, and
(C) 10 to 120 parts by mass of a melamine compound.

4. The resin composition of claim 3 wherein in formula (1), b and c are 0.

5. The resin composition of claim 3 wherein component (C) is a complete alkyl type methylated melamine compound.

6. A release sheet comprising a substrate and a release coating formed thereon, which is a cured product of the resin composition of any one of claims 3 to 5.
